# EUROPEAN PATENT SPECIFICATION

(11) **EP 2 224 395 B1**
(45) Date of publication and mention of the grant of the patent: **24.04.2013**
(21) Application number: 09154026.0
(22) Date of filing: 27.02.2009
(51) Int. Cl.: G06Q 30/02, H04M 1/725

(54) **Verification of Advertisement Presentation**
Prüfung der Werbungspräsentation
Vérification de la présentation de publicités

(43) Date of publication of application: 01.09.2010
(73) Proprietor: Research In Motion Limited, Waterloo, ON N2L 3W8 (CA)
(72) Inventor: Cumming, Joel, Watlerloo Ontario N2L 3L3 (CA); Robertson, Ian, Waterloo Ontario N2L 3L3 (CA)
(74) Representative: Patel, Binesh

(56) References cited:
- WO-A-2007/103330
- US-A1- 2002 077 902
- US-A1- 2007 190 941
- US-B1- 7 206 602
- DARREN MURPH: "Disney creates laboratory for biometric testing of advertisements"[Online] 15 May 2008 (2008-05-15), - 15 May 2008 (2008-05-15) XP002525342 Retrieved from the Internet: URL:http://www.engadgethd.com/2008/05/15/d isney-creates-laboratory-for-biometric-tes ting-of-advertisement/> [retrieved on 2009-04-24]

## Description

### FIELD

The present invention relates generally to providing advertisements to communication devices such as wireless mobile devices in a communication network and more particularly to verifying the presentation of the advertisements to a device user.

### BACKGROUND

Wireless mobile devices including smart phones, PDAs, appliances, etc. can be configured for voice, data or combined voice and data communications capabilities and are commonly used for personal and business communications. Advertisements may be communicated to a wireless mobile device for presentation to the device's user. A user may agree to receive and have the advertisements presented in exchange for a benefit. Examples of benefits may include a reduced service fee under a communication service plan associated with the device, an accumulation of credits or points for applying against purchases, and access to use a particular application or service via the wireless mobile device, etc.

US 2002/077902 A1 discloses embodiments directed to a method and apparatus for verifying review and comprehension of information. In an embodiment, biometric or biological information is gathered to verify the physical presence of the information consumer. The verification system is used to verify that the information consumer attentively reviews provided information. An incentive to review and comprehend information is provided for the information consumer. The review must be verified for the incentive to be given. In a further embodiment, review verification is accomplished by introducing a series of signifiers into the provided information. The information consumer is provided with instructions for indicating, directly or indirectly, the consumer's knowledge of the signifiers. In one embodiment, the user must indicate knowledge of a certain number of indicators to receive the incentive.

It has been reported that Disney have created a laboratory for biometric testing of advertisements. The report, by Darren Murph for AOL news on 15 May 2008, states that "In the controlled setting, gurus will be tasked with measuring "heart rate and skin conductivity while tracking the gaze of participants who are exposed to new ad models over the internet, mobile devices and TV screens.""

### SUMMARY

One concern of advertisers or others offering advertisements, particularly those associated with providing the benefit is effectiveness. An advertisement that is provided to a mobile device but is not presented is not effective. An advertisement that is presented in a manner in which the user avoids experiencing the advertisement is also not effective.

The presentation of advertisements via a communication device is verified using biosensor or biometric analysis to confirm that a user is present during the presentation. During and preferably at multiple times throughout the presentation, instances of biosensor or biometric input are received to determine a verification result. The biosensor or biometric input is determined from a measure of at least one human biological or physiological change or process or a human anatomical or physical characteristic of a user of the communication device. The verification may be useful to measure an effectiveness of the advertisement or to determine a benefit such as a subsidization of charges within a service plan for wireless or other communication devices.

In an embodiment related to the invention, there is provided a method of verifying advertisement presentation. An advertisement is presented via at least one output of a communication device. While presenting, biometric input is received for determining whether the communication device is in the presence of a particular human. In response to said biometric input, a verification result is determined to verify the presentation, including authenticating that a particular user is present.

The biometric input may be determined from a measure of at least one human anatomical or physical characteristic of a user of the communication device. A plurality of instances of the biometric input may be received periodically throughout the presenting of the advertisement. The verification result may be determined in response to the plurality of instances. A user may be periodically instructed to provide the plurality of instances of the biometric input.

Advertisements may be received and stored for subsequent presentation to a user of the communication device. An input (e.g. a user command) may be received to invoke the presentation of the advertisement.

It may be that the particular user's biometric data is enrolled for enabling the authenticating.

The biosensor or biometric input may be received via at least one input device coupled to the communication device for measuring at least one of heart rate, blood pressure or body temperature of a user.

It may be that speaker or display controls of said at least one output are monitored during said presentation to determine whether speaker or display has been turned off and wherein determining of the verification result is further responsive to said monitoring.

It may be that the controls of the at least one output device are set such that the presentation is audible or visible.

The biometric input may be received via at least one input device coupled to the communication device for determining biometric identification of a user of the communication device.

The verification result may be provided to a recipient (e.g. an advertiser or benefit provider) for determining at least one of an effectiveness of the advertisement or a benefit. The communication device may comprise a wireless communication device and the advertisement may be received via a wireless network.

It may be that access is provided to features or functions of the communication device in response to said authenticating.

In an embodiment related to the invention, there is provided a communication device for presenting advertisements. The communication device comprises a processor and a memory coupled thereto and means for providing biosensor or biometric input to the processor of memory, where the memory stores instructions and data configuring the processor to perform the method embodiment.

In an embodiment there is provided a computer program product storing computer readable instructions which when executed by a computer processor of a communication device configure the computer processor to perform the method embodiment.

In an embodiment, a system for providing advertisements is disclosed. The system comprises a server for communicating advertisements for presentation to users of communication devices; and a plurality of communication devices configured to communicate with the server according to the communication device embodiment.

In a further embodiment related to the invention there is described a method of verifying the presentation of an advertisement comprising: receiving an advertisement for presenting to a user of a wireless communication device; presenting the advertisement for the user via at least one output of the wireless communication device; while presenting the advertisement, receiving at least one biometric input with which to verify the user's identity; and providing a verification result, determined in response to said biometric input, to a recipient to verify the presenting of the advertisement. A computer program product, device and system may be configured to perform the method.

### BRIEF DESCRIPTION OF THE DRAWINGS

An embodiment of the invention will now be described by way of example only with reference to the following drawings in which:
Figure 1 is a block diagram showing an example communication network;
Figure 2 is a block diagram of a wireless mobile device in accordance with an embodiment; Figure 3 is a block diagram of a wireless mobile device showing logical components and data for operations of an advertisement presentation and verification system in accordance with an embodiment thereof;
Figure 4 is a flow chart of operations of the advertisement presentation and verification system of Figure 3 in accordance with an embodiment;
Figures 5A and 5B illustrate a representative wireless communication device;
Figure 6 is an illustration of a representative wireless communication shown held in a user's hand.

For convenience, like numerals in the description refer to like structures in the drawings.

### DETAILED DESCRIPTION

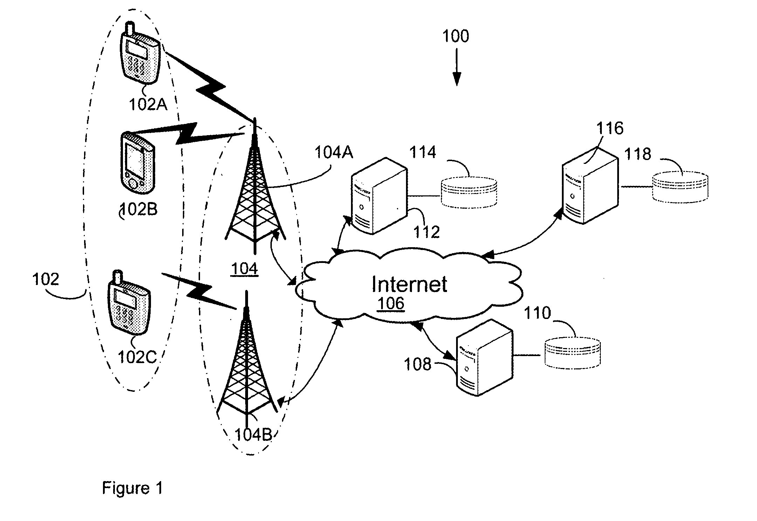

Referring to Figure 1, an example communication network 100 is illustrated in accordance with a present embodiment. Communication network 100 comprises a plurality of mobile wireless communication devices 102A, 102B and 102C, (collectively 102). The devices are coupled for wireless communication via a wireless communication network 104 represented by radio towers 104A and 104B. Network 104 is coupled to a interconnection communication facilities 106. Such facilities 106 may be configured as a local area network, wide area network such as the public Internet or combinations thereof. For example, network 104 may be coupled to other networks such as the public switched telephone network (PSTN) via network infrastructure (all not shown).

Via facilities 106 (or other private or public networks (not shown)), various informational sources (e.g. servers) may be coupled for communication. The servers may communicate among each other, with mobile devices 102 or among all. There is illustrated a server 108 providing mobile device administration (hereinafter MDAS 108), a server 112 for wireless network service control (hereinafter carrier server 112) and a server 116 for serving advertisements (hereinafter ad server 116) in accordance with a present embodiment for subsidizing mobile device usage. Each server 108, 112 and 116 is coupled to a respective data store 110, 114 and 118.

A particular mobile device 102A may comprise one of various computing devices such as a desktop computer, a laptop or other portable computer, a smart phone, a personal digital assistant (PDA), and the like configured for wireless communication via network 104. For simplicity, only some selected network infrastructure (e.g. for wireless carriers and enterprises, including gateways, firewalls, etc.) is shown.

In the present embodiment, the operation of mobile devices 102 may be at least in part under the control of MDAS 108. MDAS 108 provides and enforces usage and other policies on mobile devices 102. Policies may specify which software applications a particular device may use, the services available to those applications and how such applications and services may operate (e.g. through parameters and other configuration of the policies). Example software applications may comprise various data communication or messaging applications such as email, Instant Messaging, SMS, Internet browsing, WAP, push-based messaging and publish/subscribe message services, among others. In some embodiments, MDAS 108 may be hosted and operated in an enterprise context, such as a business or other organization, for group administration of enterprise users.

In the present embodiment, the group of mobile devices 102 receive wireless network services over network 104 in accordance with a group plan from a particular network service provider (e.g. a carrier). The wireless network services are provided, at least in part, under the control of carrier server 112. A group plan may specify pricing and other particulars for voice and data traffic. Voice traffic is typically priced and counted in units of time whereas data traffic is priced and counted in units of data (e.g. bytes). Traffic or usage may be priced on a per mobile device basis or sometimes shared among the group. For example, in an enterprise group plan context, the plan may allow a group of users from the same enterprise such as a business to use X bytes of data traffic or Y seconds of voice traffic (or a combination of voice and data) in total over a particular period such as a month for an applicable fee. In the present embodiment, carrier server 112 monitors the voice and data traffic for each mobile device 102A-102C in accordance with the applicable plan. In an alternative embodiment, the devices 102 may receive such services in accordance with individual user plans with consequent individual monitoring and plan compliance.

As described further herein below, mobile device usage, in particular, traffic on network 104 may be subsidized by providing advertisements from ad server 116 to devices 102 for presentation to the respective device's user. Subsidization may be configured for group or individual user plans. Subsidization may relate to voice usage, data usage or both. Advertisements (or links thereto) may be stored to the device, for example, and the advertisements presented to the device's user in response to the user's command for the user's convenience. Presentation of the advertisement to the user is verified using one or more of techniques to determine whether the device is present with the user (e.g. that a human user is operating the device) while the advertisement is presented. Such techniques may comprise biosensing or biometric techniques to determine the presence of a human user while the advertisement is presented.

Verification results may be provided to recipients such as a service provider within the communication network 104 or a recipient in an advertisement channel of trade as a measure of advertisement effectiveness. The verification results may be useful to determine subsidization in accordance with the plan or to determine service fees for advertisers, etc. Recipients may comprise an operator of ad server 116, a carrier service provider, an operator of an MDAS, an advertising agent or advertiser providing the advertisements for communication to mobile devices, the user, etc. In some embodiments, before being provided to at least some of the recipients, verification results may be aggregated or made anonymous to remove information capable of identifying a particular user, as may be desired, for example, for reasons of privacy. Advertisements also may be provided in accordance with other plans or agreements for other benefits. For example, benefits may comprise an accumulation of credits or points for applying against the price of purchases. Other benefits may comprise access to use a particular application or service via the wireless mobile device. Advertisement presentation verification results may be useful to determine the benefits extended under such plans. Credits may not be accumulated or access may be denied if advertisement presentation cannot be sufficiently verified.

It is appreciated that advertisements may comprise one or more of audio, text or video content. Thus presentation may comprise outputting the advertisement to at least one output of the device such as a speaker, display screen or both.

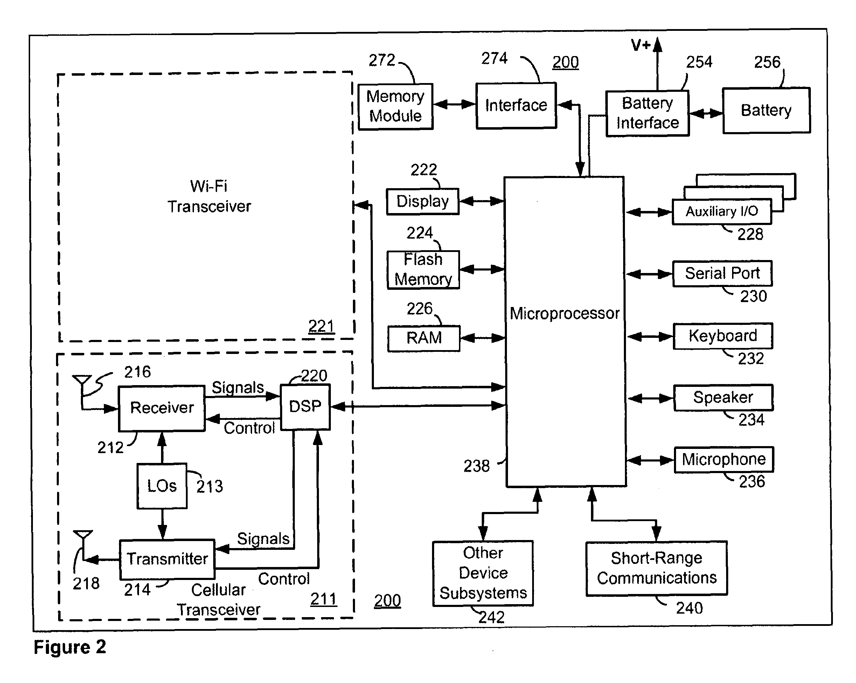

Figure 2 is a detailed block diagram of an embodiment of a handheld wireless communication device 200 that may be configured as one of mobile devices 102 as described. Handheld device 200 is preferably a two-way communication device having at least voice and advanced data communication capabilities, including the capability to communicate with other computer systems. Depending on the functionality provided by handheld device 200, it may be referred to as a data messaging device, a two-way pager, a cellular telephone with data messaging capabilities, a wireless Internet appliance, personal digital assistant (PDA), smart phone, BlackBerry® or a data communication device (with or without telephony capabilities).

Handheld device 200 may incorporate a cellular transceiver (communication subsystem) 211, which includes a receiver 212, a transmitter 214, and associated components, such as one or more (preferably embedded or internal) antenna elements 216 and 218, local oscillators (LOs) 213, and a processing module such as a digital signal processor (DSP) 220. The particular design of communication subsystem 211 depends on the communication network in which handheld device 200 is intended to operate.

Handheld device 200 may send and receive communication signals over the network 104 after required network registration, authentication or activation procedures have been completed. Signals received by antenna 216 through the network are input to receiver 212, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of handheld device 200 and handheld device 200 may comprise a memory module 272, memory module card or a Removable User Identity Module (R-UIM) or Subscriber Identity Module (SIM/USIM), to be inserted in or connected to an interface 274 to facilitate operation in applicable networks (e.g. 104). Alternatively, memory module 272 may be a non-volatile memory that is programmed with configuration data by a service provider so that mobile station 200 may operate in the network. Since handheld device 200 is a mobile battery-powered device, it also includes a battery interface 254 for receiving one or more preferably rechargeable batteries 256. Such a battery 256 provides electrical power to most if not all electrical circuitry in handheld device 200, and battery interface 254 provides for a mechanical and electrical connection for it. The battery interface 254 is coupled to a regulator (not shown in Figure 2) that provides power V+ to all of the circuitry.

Handheld device 200 may include a Wi-Fi transceiver 221 that may comprise similar components/chipsets to subsystem 211 adapted for one or more Wi-Fi protocols. Though Wi-Fi is shown, WiMAX is one alternative transceiver. In some embodiments, device 200 may be capable of both Wi-Fi and WiMAX communications in accordance with software-defined radio ("cognizant radio") techniques.

Handheld device 200 includes a microprocessor 238 that controls its overall operation. Communication functions, including at least data and voice communications, are performed through communication subsystem 211. Microprocessor 238 also interacts with additional device subsystems such as an LCD or other display device 222, a flash memory 224, a random access memory (RAM) 226, auxiliary input/output (I/O) subsystems or devices 228, a serial port 230, a keyboard 232, at least one speaker 234, a microphone 236, a short-range communications subsystem 240, and any other device subsystems (e.g. removable media) generally designated at 242. Example auxiliary I/O subsystems or devices 228 for verifying the presentation of an advertisement are described further herein below.

Some of the subsystems shown in Figure 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Operating system, specific device applications or parts thereof, may be temporarily loaded into a volatile store such as RAM 226.

Microprocessor 238, in addition to its operating system functions, preferably enables execution of software applications on handheld device 200. A predetermined set of applications that control basic device operations, including at least data and voice communication applications, will normally be installed on handheld device 200 during its manufacture. A preferred application that may be loaded onto handheld device 200 may be a personal information manager (PIM) application having the ability to organize and manage data items relating to a user such as, but not limited to, e-mail, calendar events, voice mails, appointments, and task items. Naturally, one or more memory stores are available on handheld device 200 and memory module 272 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on handheld device 200 with respect to such items. This is especially advantageous where the host computer system is the mobile station user's office or enterprise computer system. Additional applications may also be loaded onto handheld device 200 through network, an auxiliary I/O subsystem 228, serial port 230, short-range communications subsystem 640, or any other suitable subsystem 242, and installed by a user in RAM 226 or preferably a non-volatile store (e.g. 224) for execution by microprocessor 238. Such flexibility in application installation increases the functionality of handheld device 200 and may provide enhanced on-device functions, communication-related functions, or both. For example, secure communication applications may enable electronic commerce functions and other such financial transactions to be performed using handheld device 200.

In a data communication mode, a received signal such as a text message, an e-mail message, or web page download, or advertisement will be processed by applicable communication subsystem 211 or 221 and input to microprocessor 238. Microprocessor 238 will preferably further process the signal, in accordance with an associated application, for output to display 222 or alternatively to auxiliary I/O device 228. A user of handheld device 200 may also compose data items in accordance with an associated application, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211 or 221.

For voice communications, the overall operation of handheld device 200 is substantially similar, except that the received signals would be output to speaker 234 and signals for transmission would be generated by microphone 236. Alternative voice or audio I/O subsystems, such as a voice message recording subsystem, may also be implemented. Although voice or audio signal output is preferably accomplished primarily through speaker 234, display 222 may also be used to provide an indication of the identity of a calling party, duration of a voice call, or other voice call related information, as some examples.

Auxiliary I/O subsystems or devices 228 may comprise one or more biosensor or biometric input devices useful to verify the presentation of an advertisement to a user. Such subsystems or devices 228 for biosensing analysis or biometric analysis may comprise a camera, an infrared scanner, a heart rate monitor, a finger print reader, or combinations thereof, etc. Some subsystems or devices 228 (e.g. a camera) may be configured for performing additional functions and not be limited for biosensing or biometric analysis.

Biosensors are subsystems or devices that facilitate automated operations to sense and provide information about a biological or physiological change or process, such as blood pressure or heart rate, of an individual under observation by the biosensor. Applicable subsystems or devices 228 for biosensing analysis may be configured for measuring particular characteristics of the user such as heart rate measuring, blood pressure measuring, body temperature measuring, among others, to detect that a human user is in the presence of the biosensors and hence operating device 200 while the device is presenting an advertisement. Human heart rate, blood pressure, temperature and other such human physiological characteristics may be difficult to simulate to provide false results and thus such provide enhanced reliable measures of human presence.

Biometrics is an automated operation for the authentication of an individual's identity. It is based on an anatomical or physical characteristic of a user and a previously captured and stored representation of that same characteristic. Applicable subsystems or devices 228 for biometric analysis may be configured for retinal and/or iris determination, facial determination, fingerprint determination or vascular pattern determination, among others, to detect the presence of a human user operating device 200 while the device is presenting the advertisement. As biometric analysis authenticates that a particular user is present with device 200, subsystems or devices 228 providing biometric input may be preferred.

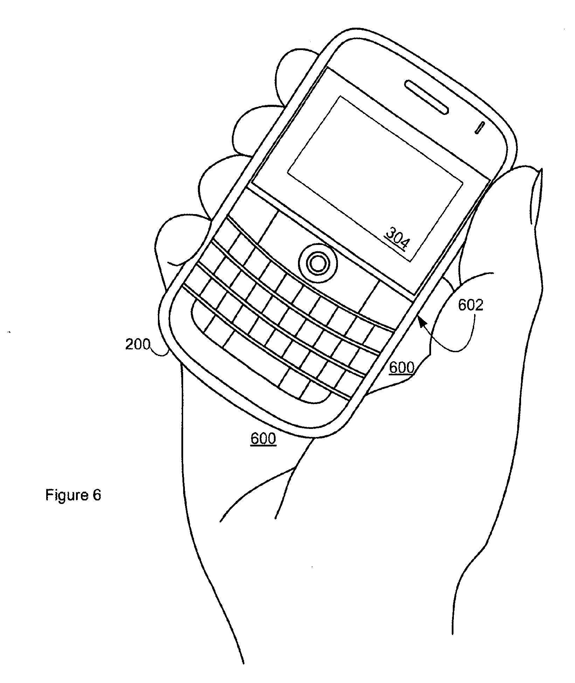

Preferably, input receiving components (not shown) of subsystems or devices 228 are positioned on or about handheld device 200 to facilitate normal presentation of advertisements (e.g. via at least one speaker 234, display 222 or both) while the applicable biosensing and biometric inputs are received. For example, an infrared (IR) or near-IR scanner 602 for determining a vascular pattern (veins and capillaries) in a palm or other portion of a hand may be positioned on a back side of a device 200 where the device 200 is held near the user's palm 600 to permit the user to view the display 222 on the opposite side as illustrated in Figure 6. Near-IR light may be employed to produce reflected or transmitted images of vascular structures (blood vessels) of a hand or face, for example. De-oxygenated haemoglobin in the vascular structures absorbs the near-IR radiation making the vascular structures appear darker than surrounding structures. Vascular patterns are considered sufficiently unique to an individual to be used to verify a person's identity. Spoofing or otherwise attempting to replicate another person's pattern is greatly difficult. Internal biometric sensing may be less susceptible to environmental or surface conditions such as rain, dirt, external injuries etc.

A heart rate measuring device may be similarly positioned so that the user may grip the device to provide a heart rate sample while viewing the display 222. A camera or other input lens for capturing facial data may be mounted so that it faces the user when the user is looking at the display 222 or is listening to the speaker 234.

Preferably the subsystems or devices 228 are relatively passive and non-invasive during operation, minimizing user action to provide biosensing or biometric data samples for operation of the respective analysis.

Subsystems or devices 228 may be configured to determine and output a signal indicating the presence of a human or a specific human. Alternatively they may be configured to provide input data to microprocessor 238 with which it may make such a determination. For example, a finger print reader may be configured to read a finger print and compare the print to information stored in association with the reader to provide a result indicating a match or no match to microprocessor 238. An enrolment process to establish user data with which to conduct the biometric analysis may be performed so that subsystem or device 200 may acquire the necessary baseline data.

Alternatively, a finger print reader may read a finger print and provide data representing the finger print to the microprocessor 238 for it to determine a match using finger print data for the user stored in association with the microprocessor 238. Similarly, an enrolment process may be performed to acquire this baseline comparison data. Typically a biosensor provides data representing the change or process it monitors (e.g. a heart rate measure) but does not provide a determination per se indicating the presence of a human. Microprocessor 238 may be configured to receive biosensor data and compare such to data representing normal human thresholds or user specific thresholds to make such a determination. For example, for a heart rate reading biosensor, microprocessor 238 may be configured to request the user to provide baseline samples via the input of device 228 to establish a range of data for the user. Data may reflect heart rates at rest, while moderately active (e.g. walking) and while very active (such as during hard aerobic exercise). Microprocessor 238 may use this range of data with applicable +/- variations to compare to data provided by the device 200 when an advertisement is presented. The user may indicate the current activity or the device 200 be configured to determine whether the device is at rest, moving moderately or aggressively to assist with the comparison.

Serial port 230 in Figure 2 may be implemented in a personal digital assistant (PDA)-type communication device for which synchronization with a user's desktop computer is a desirable, albeit optional, component. Serial port 230 enables a user to set preferences through an external device or software application and extends the capabilities of handheld device 200 by providing for information or software downloads to handheld device 200 other than through a wireless communication network. The alternate download path may, for example, be used to load an encryption key onto handheld device 200 through a direct and thus reliable and trusted connection to thereby provide secure device communication. Serial port 230 may also be used to couple a biosensing or biometric subsystem or device. A biometric scanner may be coupled to device 200 via serial port 230.

Short-range communications subsystem 240 is an additional optional component that provides for communication between handheld device 200 and different systems or devices, which need not necessarily be similar devices. For example, subsystem 240 may include an IR transceiver and associated circuits and components, or a Bluetooth^{™} communication module to provide for communication with similarly enabled systems and devices. Subsystem 240 may also be used to couple a biosensing or biometric subsystem or device. For example, a remote heart rate monitor may be worn by a user and the monitor may provide data via IR or other short range wireless techniques to device 200 via subsystem 240.

In some embodiments and use scenarios, coupling biosensing or biometric devices via serial port 230 or subsystem 240 may be less reliant manners of verifying the presence of a user during advertisement presentation. For example, during presentation while wearing a Bluetooth enabled monitor, a user may move away from the device 200 and avoid the presentation yet stay within range of the Bluetooth network. As such, biosensing or biometric devices that are configured to operate while the device 200 is held and that require touching or other tactile engagement by the user may be preferred.

In one embodiment, the type of biosensing or biometric device employed may be useful as a factor in determining the verification result. That is, a component of the result may indicate device type information. Such information may be useful when measuring the effectiveness of the presentation. Such information may be useful when determining a benefit. In a similar way, the type of verification operations employed may be useful as a factor in determining the verification result. For example, verification operations which require multiple active inputs from the user may be distinguished from passive inputs or inputs not requiring device touching. A component of the verification result may indicate verification operation type information. Such information may be useful when measuring the effectiveness of the presentation. Such information may be useful when determining a benefit.

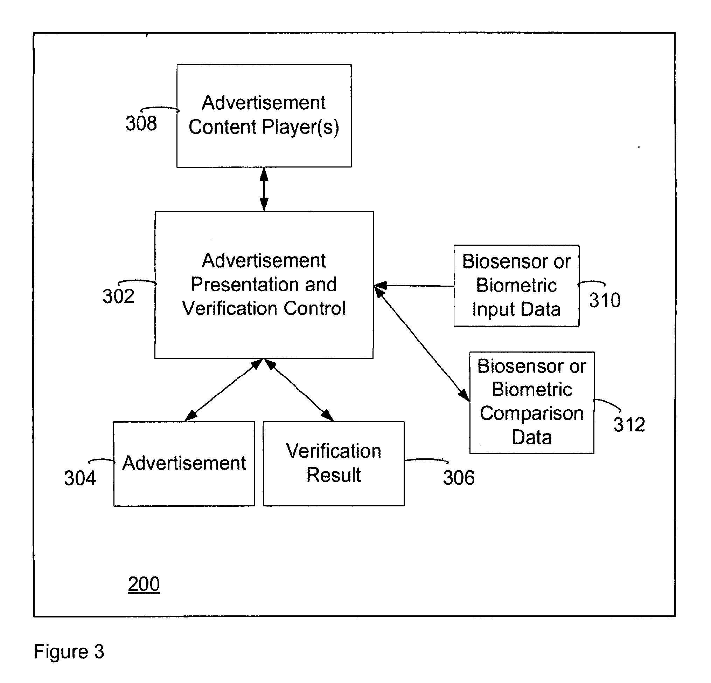

Figure 3 illustrates, in accordance with an embodiment thereof, a block diagram of device 200 showing components (e.g. instructions and data) for operation of an advertisement presentation and verification system. Figure 3 shows a view of a run-time and/or persistent store (such as RAM 226 or flash memory 224) of device 200 comprising broadly, an advertisement presentation and verification control component 302 ("control component"), an advertisement 304, a verification result 306, one or more advertisement content players 308, biosensor or biometric input data 310 and biosensor or biometric comparison data 312. It is understood that other components may be present such as an operating system, communication subsystem, device drivers, applications, etc. (all not shown).

Control component 302 may be configured to receive and store advertisements (e.g. 304) locally to device 200 for presenting to a user. Alternatively, control component 302 may receive links or other identifying data (not shown) with which to retrieve advertisements from a remote store when commanded to present an advertisement. Advertisements may be received wirelessly such as over network 104, via removable media (not shown), via serial port 230 (e.g.) etc.

Via a user interface of control component 302 (not shown), control component 302 receives user input requesting the presentation of an advertisement. Control component 302 facilitates the presentation via one or more applicable advertisement content players 308 such as an audio, video or text player. While presenting the advertisement, control component 302 receives biosensor or biometric input data 310 from an applicable device (e.g. 228) with which to determine a verification result 306 indicating whether a user is operating the device 200 during the presentation. Control component 302 may provide instructions to the user via the user interface to engage during the presentation the applicable device providing the biosensor or biometric input data 310.

The input data 310 may be received periodically while the advertisement is presented to determine whether the user is operating the device 200 throughout the presentation in accordance with verification operations of control component 302. Optionally, in accordance with the verification operations, the user may be instructed from time to time during the presentation to provide the biosensor or biometric input data 310. Verification operations may require a predetermined number of successful determinations of the presence of user during the presentation in order to determine an ultimate verification result for the presentation. By way of example, a touch screen display device with finger print reading abilities may be configured as a biosensing or biometric subsystem or device. Instructions may be provided to the user, from time to time, via the touch screen interface, to request the user to touch a particular location on the screen to acquire a finger print reading. The location on the screen may be varied providing a random dynamic location so that the user pays attention and touches appropriately.

As noted, the biosensor or biometric input data 310 may comprise data for comparison by control component 302 against biosensor or biometric comparison data 312. Alternatively, biosensor or biometric data 310 may comprise a determination of presence/operation per se for use by control component 302 to determine the verification result 306 in accordance with the verification operations.

If the input data 310 provided indicates the presence of a user (i.e. operation by human user) as determined by the verification operations, a positive verification result indicating user operation may be determined and stored. Otherwise a negative verification result indicating no user operation may be determined and stored. Other verification results may be determined such as a partial result suggesting that the user operated the device for some of the time or an inconclusive result indicating that neither a positive nor negative result could be determined. The verification result 306 may be stored in association with data identifying the advertisement. Control component 302 may aggregate the verification result with other such results (not shown) for device 200. Control component provides (e.g. communicates to server 116) the verification result 306 (either alone or in a batch or other aggregation and either with or without data identifying the user and the advertisement(s) verified) for delivery to one or more recipients which result 306 may be used as a measure of effectiveness as described. Similarly, verification result 306 may be used locally by microprocessor 238 in accordance with its configuration to provide access to certain features or functions as may be applicable.

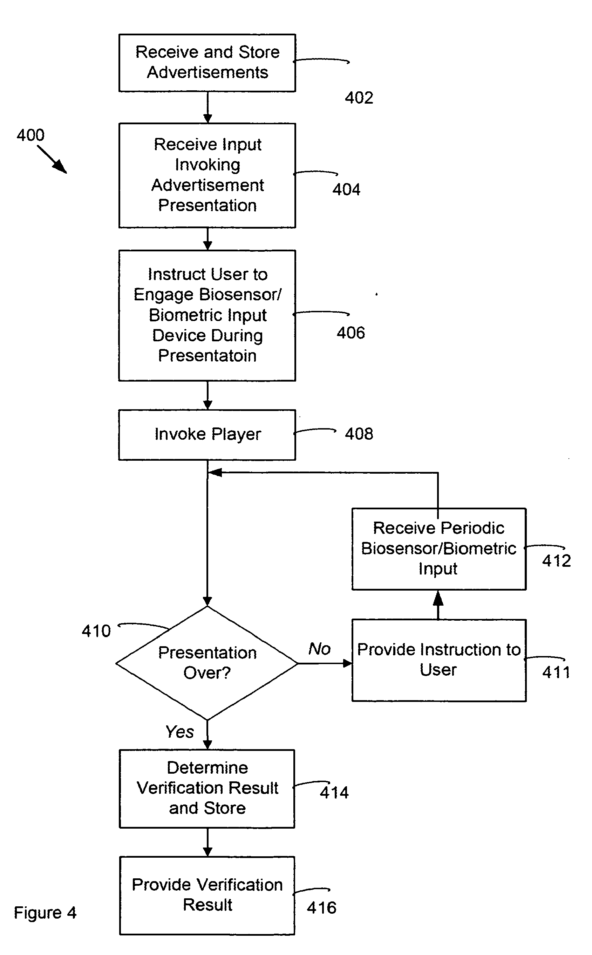

Figure 4 is a flowchart illustrating operations 400 for advertisement presentation and verification. At step 402, a plurality of advertisements including advertisement 304 is received and stored to device 200. At step 404, input is received to invoke a user interface for control component 302 and to request presentation of an advertisement. At step 406, the user may be instructed by the user interface to engage the input component of the biosensor or biometric input device during the presentation. Step 406 is optional. At step 408, control component 302 invokes the player 308 to play the advertisement 304. It may be desirable that one or the other of player 308 or control component 302 set speaker or display controls so that the presentation is actually audible or visible, etc.

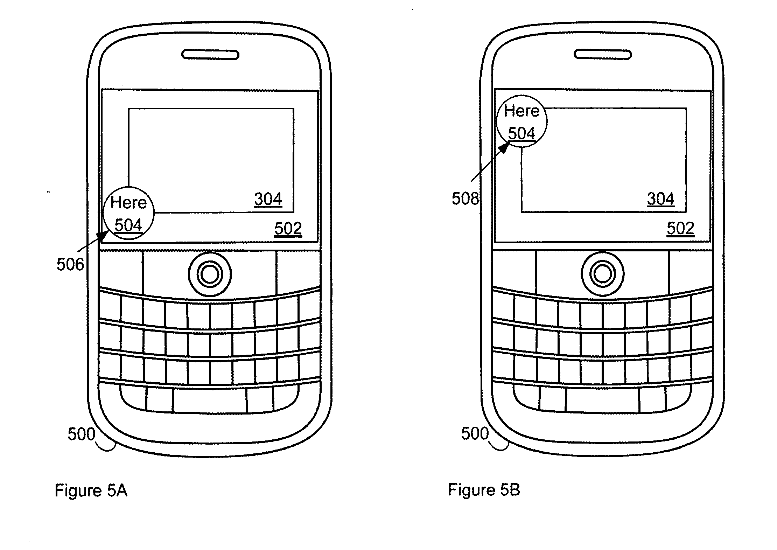

At steps 410-412, control component 302 periodically receives biosensor or biometric input data 310. Optionally instructions to the user may be provided during the presentation to guide the user's input and assist with the determination (step 411). As noted, the instructions may introduce dynamic random acquisition to assist with validity and may direct the user to the advertisement particularly if the instruction is integrated with the presentation of the advertisement. Figures 5A and 5B illustrate a representative wireless communication device 500 in accordance with one embodiment of device 200. In device 500, display 222 is configured to comprise a touch screen display 502 capable of reading a finger print. In Figure 5A, touch screen display 502 presents an instruction 504 to touch the screen at a first location 506 to provide a first finger print input while presenting advertisement 304. In Figure 5B, touch screen display 502 presents the instruction 504 to touch the screen 502 at a second location 508, different from the first location 506, to provide a second finger print instance.

Control component 302 may monitor speaker or display controls during the presentation to determine whether the user has turned off these outputs and factor such monitoring into the verification result, provide an applicable user notification or both.

At step 414 in accordance with the verification operations (e.g. requiring 5 successful determinations of user presence during the presentation) a determination of the verification result is made and stored. As may be necessary, a comparison of the periodic input data 310 to data 312 may be made (not shown). The presence of a human user for each input data instance is determined as applicable. If the input data is a signal indicating presence per se, comparison is not necessary. As noted above, the verification result may comprise biosensing or biometric device type information, verification operation type information or both.

At step 416 the verification result is communicated to server 116.

Though not shown, operations to enrol a user's applicable data for biosensing analysis or biometric analysis may be performed prior to operations 400 to enable verification.

Although specific embodiments of the disclosure have been described herein, variations may be made thereto. For example, though determining verification results is discussed on an individual advertisement basis, device 200 may be configured to determine a verification result for a group of advertisements such as those presented consecutively. Advertisements may be presented to the user in other manners that are not reliant upon direct invocation by the user such as described with reference to the player or cached advertisements at the user's leisure. For example, advertisements may be presented when invoking a particular application such as when a communication application is invoked to make a voice call or otherwise during applicable operation of the application. Verification by biometric or biosensing analysis may be performed in these and other scenarios as well. Verification results may be determined from inputs from one or more biosensors and biometric devices. Though described with reference to wireless communication devices, similar operations may be performed for wired communication devices such as appropriately configured desktop computers, telephone handsets, etc.

The scope of the invention is defined by the appended claims.

## Claims

1. A method of verifying advertisement presentation comprising:
presenting an advertisement (408-410) via at least one output of a communication device (102A-102C, 200, 500);
while presenting, receiving biometric input (412) for determining whether the communication device is in the presence of a particular user, the biometric input comprising a vascular pattern in at least a portion of a palm of the particular user as positioned on a back side of the communication device, the back side being opposite a display viewing side of the communication device, wherein the vascular pattern is determined from an infrared, IR, or near-IR scanner positioned on the backside of the device;
in response to said biometric input, comparing the received biometric input to stored comparison data to determine a verification result (414) to verify the presentation, including authenticating that the particular user is present.

2. The method of claim 1 wherein a plurality of instances of the biometric input are received periodically throughout the presenting of the advertisement and wherein the verification result is determined in response to said plurality of instances.

3. The method of claim 2 comprising periodically instructing a user (411) to provide the plurality of instances of biometric input.

4. The method of claim 1 comprising receiving and storing the advertisement (402) for subsequent presentation to a user of the communication device.

5. The method of any one of claims 1 to 4 comprising enrolling the particular user's biometric data (312) for enabling the authenticating.

6. The method of any one of claims 1 to 5 further comprising monitoring speaker or display controls of said at least one output during said presentation to determine whether the speaker or display has been turned off; and wherein determining of the verification result is further responsive to said monitoring.

7. The method of any one of claims 1 to 6 further comprising setting the controls of the at least one output device such that the presentation is audible or visible.

8. The method of any one of claims 1 to 7 wherein the biometric input is received via at least one input device coupled to the communication device for determining biometric identification of a user of the communication device

9. The method of any one of claims 1 to 8 comprising providing the verification result (416) to a recipient for determining at least one of an effectiveness of the advertisement or a benefit.

10. The method of any one of claims 1 to 9 wherein the communication device comprises a wireless communication device and wherein the method comprises receiving the advertisement via a wireless network (104).

11. The method of any one of claims 1 to 10 further comprising providing access to features or functions of the communication device in response to said authenticating.

12. A communication device (102a-102c, 200, 500) for presenting advertisements, the communication device comprising:
a processor (238) and a memory (224) coupled thereto; and
an infrared, IR, or near-IR scanner positioned on the backside of the device for providing a biosensor or biometric input (228, 230, 240) to said processor or said memory, the biometric input comprising a vascular pattern in at least a portion of a palm of a user as positioned on a back side of the communication device, the back side being opposite a display viewing side of the communication device;
wherein said memory storing instructions and data which when executed by the processor configure the communication device to perform a method according to any of claims 1 to 11.

13. A computer program product storing computer readable instructions which when executed by a communication device (102a-102c, 200, 500), said communication device comprising a processor (238) and a memory (224) coupled thereto and an infrared, IR, or near-IR scanner positioned on the backside of the device for providing a biosensor or biometric input (228, 230, 240) to said processor or said memory, the biometric input comprising a vascular pattern in at least a portion of a palm of a user as positioned on a back side of the communication device, the back side being opposite a display viewing side of the communication device; to configure the communication device to perform a method according to any of claims 1 to 11.

14. A system for providing advertisements comprising:
a server (116) for communicating advertisements for presentation to users of communication devices (102a-102c, 200, 500); and
a plurality of communication devices configured in accordance with claim 12.

## Patentansprüche

1. Ein Verfahren zum Verifizieren einer Werbungspräsentation, das aufweist:
Präsentieren einer Werbeanzeige (408-410) über zumindest eine Ausgabe einer Kommunikationsvorrichtung (102A-102C, 200, 500);
während des Präsentierens, Empfangen einer biometrischen Eingabe (412) zum Bestimmen, ob die Kommunikationsvorrichtung in Gegenwart eines bestimmten Benutzers ist, wobei die biometrische Eingabe ein Gefäßmuster in zumindest einem Teil einer Handfläche des bestimmten Benutzers aufweist, wie auf einer Rückseite der Kommunikationsvorrichtung positioniert, wobei die Rückseite entgegengesetzt zu einer Anzeigebetrachtungsseite der Kommunikationsvorrichtung ist, wobei das Gefäßmuster von einer Infrarot(IR)- oder Nah-IR-Abtastvorrichtung bestimmt wird, die auf der Rückseite der Vorrichtung positioniert ist;
in Reaktion auf die biometrische Eingabe, Vergleichen der empfangenen biometrischen Eingabe mit gespeicherten Vergleichsdaten, um ein Verifizierungsergebnis (414) zu bestimmen, um die Präsentation zu verifizieren, einschließlich einer Authentifizierung, dass der bestimmte Benutzer gegenwärtig ist.

2. Das Verfahren gemäß Anspruch 1, wobei eine Vielzahl von Instanzen der biometrischen Eingabe regelmäßig während der Präsentation der Werbeanzeige empfangen werden, und wobei das Verifizierungsergebnis in Reaktion auf die Vielzahl von Instanzen bestimmt wird.

3. Das Verfahren gemäß Anspruch 2, das ein regelmäßiges Anweisen eines Benutzers (411) aufweist, die Vielzahl von Instanzen der biometrischen Eingabe vorzusehen.

4. Das Verfahren gemäß Anspruch 1, das ein Empfangen und Speichern der Werbeanzeige (402) für eine nachfolgende Präsentation für einen Benutzer der Kommunikationsvorrichtung aufweist.

5. Das Verfahren gemäß einem der Ansprüche 1 bis 4, das ein Registrieren der biometrischen Daten (312) des bestimmten Benutzers zum Ermöglichen der Authentifizierung aufweist.

6. Das Verfahren gemäß einem der Ansprüche 1 bis 5, das weiter aufweist ein Überwachen von Lautsprecher- oder Anzeige-Steuerungen der zumindest einen Ausgabe während der Präsentation, um zu bestimmen, ob der Lautsprecher oder die Anzeige ausgeschaltet wurde; und wobei das Bestimmen des Verifizierungsergebnisses weiter in Reaktion auf das Überwachen ist.

7. Das Verfahren gemäß einem der Ansprüche 1 bis 6, das weiter aufweist ein Setzen der Steuerungen der zumindest einen Ausgabevorrichtung derart, dass die Präsentation hörbar oder sichtbar ist.

8. Das Verfahren gemäß einem der Ansprüche 1 bis 7, wobei die biometrische Eingabe über zumindest eine Eingabevorrichtung empfangen wird, die mit der Kommunikationsvorrichtung gekoppelt ist, zum Bestimmen einer biometrischen Identifikation eines Benutzers der Kommunikationsvorrichtung.

9. Das Verfahren gemäß einem der Ansprüche 1 bis 8, das aufweist ein Vorsehen des Verifizierungsergebnisses (416) an einen Empfänger zum Bestimmen zumindest eines aus einer Effektivität der Werbeanzeige oder einem Vorteil.

10. Das Verfahren gemäß einem der Ansprüche 1 bis 9, wobei die Kommunikationsvorrichtung eine drahtlose Kommunikationsvorrichtung aufweist und wobei das Verfahren ein Empfangen der Werbeanzeige über ein drahtloses Netzwerk (104) aufweist.

11. Das Verfahren gemäß einem der Ansprüche 1 bis 10, das weiter aufweist ein Vorsehen eines Zugriffs auf Merkmale oder Funktionen der Kommunikationsvorrichtung in Reaktion auf das Authentifizieren.

12. Eine Kommunikationsvorrichtung (102a-102c, 200, 500) zum Präsentieren von Werbeanzeigen, wobei die Kommunikationsvorrichtung aufweist:
einen Prozessor (238) und einen damit gekoppelten Speicher (224); und
eine Infrarot(IR)- oder Nah-IR-Abtastvorrichtung, die an der Rückseite der Vorrichtung positioniert ist, zum Vorsehen einer Biosensor- oder biometrischen Eingabe (228, 230, 240) an den Prozessor oder den Speicher, wobei die biometrische Eingabe aufweist ein Gefäßmuster in zumindest einem Teil einer Handfläche eines Benutzers, wie auf einer Rückseite der Kommunikationsvorrichtung positioniert, wobei die Rückseite entgegengesetzt zu einer Anzeigebetrachtungsseite der Kommunikationsvorrichtung ist;
wobei der Speicher Anweisungen und Daten speichert, die bei Ausführung durch den Prozessor die Kommunikationsvorrichtung konfigurieren, ein Verfahren gemäß einem der Ansprüche 1 bis 11 durchzuführen.

13. Ein Computerprogrammprodukt, das computerlesbare Anweisungen speichert, die bei Ausführung durch eine Kommunikationsvorrichtung (102a-102c, 200, 500) die Kommunikationsvorrichtung konfigurieren, ein Verfahren gemäß einem der Ansprüche 1 bis 11 durchzuführen, wobei die Kommunikationsvorrichtung einen Prozessor (238) und einen damit gekoppelten Speicher (224) aufweist und eine Infrarot(IR)- oder Nah-IR-Abtastvorrichtung, die an der Rückseite der Vorrichtung positioniert ist, zum Vorsehen einer Biosensor- oder biometrischen Eingabe (228, 230, 240) an den Prozessor oder den Speicher, wobei die biometrische Eingabe aufweist ein Gefäßmuster in zumindest einem Teil einer Handfläche eines Benutzers, wie auf einer Rückseite der Kommunikationsvorrichtung positioniert, wobei die Rückseite entgegengesetzt zu einer Anzeigebetrachtungsseite der Kommunikationsvorrichtung ist.

14. Ein System zum Vorsehen von Werbeanzeigen, das aufweist:
einen Server (116) zum Kommunizieren von Werbeanzeigen zur Präsentation für Benutzer von Kommunikationsvorrichtungen (102a-102c, 200, 500); und
eine Vielzahl von Kommunikationsvorrichtungen, die gemäß Anspruch 12 konfiguriert sind.

## Revendications

1. Procédé de vérification de présentation de publicité comprenant :
la présentation d'une publicité (408-410) via au moins une sortie d'un dispositif de communication (102A-102C, 200, 500) ;
pendant la présentation, recevoir une entrée biométrique (412) pour déterminer si le dispositif de communication est en présence d'un utilisateur particulier, l'entrée biométrique comprenant un réseau vasculaire dans au moins une partie d'une paume de l'utilisateur particulier telle que positionnée sur un côté arrière du dispositif de communication, le côté arrière étant opposé à un côté de visualisation de l'affichage du dispositif de communication, où le réseau vasculaire est déterminé à partir d'un scanneur infrarouge, IR, ou infrarouge proche positionné sur le côté arrière du dispositif ;
en réponse à ladite entrée biométrique, comparer l'entrée biométrique reçue à des données de comparaison stockées pour déterminer un résultat de vérification (414) pour vérifier la présentation, comprenant l'authentification selon laquelle l'utilisateur particulier est présent.

2. Procédé selon la revendication 1, dans lequel une pluralité d'instances de l'entrée biométrique sont reçues périodiquement tout au long de la présentation de la publicité et dans lequel le résultat de vérification est déterminé en réponse à ladite pluralité d'instances.

3. Procédé selon la revendication 2, comprenant le fait de donner pour instruction périodiquement à un utilisateur (411) de fournir la pluralité d'instances d'entrée biométrique.

4. Procédé selon la revendication 1, comprenant la réception et le stockage de la publicité (402) pour une présentation subséquente à un utilisateur du dispositif de communication.

5. Procédé selon l'une quelconque des revendications 1 à 4, comprenant l'inscription des données biométriques de l'utilisateur particulier (312) pour permettre l'authentification.

6. Procédé selon l'une quelconque des revendications 1 à 5, comprenant en outre la surveillance de commandes de haut-parleur et d'afficheur de ladite au moins une sortie au cours de ladite présentation pour déterminer si le haut-parleur ou l'afficheur a été éteint ; et dans lequel la détermination du résultat de vérification est en outre sensible à ladite surveillance.

7. Procédé selon l'une quelconque des revendications 1 à 6, comprenant en outre le réglage des commandes du au moins un dispositif de sortie de sorte que la présentation soit audible ou visible.

8. Procédé selon l'une quelconque des revendications 1 à 7, dans lequel l'entrée biométrique est reçue via au moins un dispositif d'entrée couplé au dispositif de communication pour déterminer l'identification biométrique d'un utilisateur du dispositif de communication

9. Procédé selon l'une quelconque des revendications 1 à 8, comprenant la fourniture du résultat de vérification (416) à un destinataire pour déterminer au moins un d'une efficacité de la publicité ou d'un bénéfice.

10. Procédé selon l'une quelconque des revendications 1 à 9, dans lequel le dispositif de communication comprend un dispositif de communication sans fil et dans lequel le procédé comprend la réception de la publicité via un réseau sans fil (104).

11. Procédé selon l'une quelconque des revendications 1 à 10, comprenant en outre la fourniture de l'accès à des caractéristiques ou fonctions du dispositif de communication en réponse à ladite authentification.

12. Dispositif de communication (102a-102c, 200, 500) pour présenter des publicités, le dispositif de communication comprenant :
un processeur (238) et une mémoire (224) couplée à celui-ci ; et
un scanneur infrarouge, IR, ou infrarouge proche positionné sur le côté arrière du dispositif pour fournir un biocapteur ou une entrée biométrique (228, 230, 240) audit processeur ou à ladite mémoire, l'entrée biométrique comprenant un réseau vasculaire dans au moins une partie d'une paume d'un utilisateur telle que positionnée sur un côté arrière du dispositif de communication, le côté arrière étant opposé à un côté de visualisation de l'affichage du dispositif de communication ;
dans lequel ladite mémoire stockant des instructions et des données qui, lorsqu'elles sont exécutées par le processeur, configurent le dispositif de communication pour effectuer un procédé selon l'une quelconque des revendications 1 à 11.

13. Produit de programme informatique stockant des instructions lisibles par ordinateur qui, lorsqu'elles sont exécutées par un dispositif de communication (102a-102c, 200, 500), ledit dispositif de communication comprenant un processeur (238) et une mémoire (224) couplée à celui-ci et un scanneur infrarouge, IR, ou infrarouge proche positionné sur le côté arrière du dispositif pour fournir un biocapteur ou une entrée biométrique (228, 230, 240) audit processeur ou à ladite mémoire, l'entrée biométrique comprenant un réseau vasculaire dans au moins une partie d'une paume d'un utilisateur telle que positionnée sur un côté arrière du dispositif de communication, le côté arrière étant opposé à un côté de visualisation de l'affichage du dispositif de communication ; pour configurer le dispositif de communication afin d'effectuer un procédé selon l'une quelconque des revendications 1 à 11.

14. Système pour fournir des publicités comprenant :
un serveur (116) pour communiquer des publicités pour la présentation à des utilisateurs de dispositifs de communication (102a-102c, 200, 500) ; et
une pluralité de dispositifs de communication configurés conformément à la revendication 12.
